# FASCICULE DE BREVET EUROPEEN

(11) **EP 4 313 768 B1**
(45) Date de publication et mention de la délivrance du brevet: **24.07.2024**
(21) Numéro de dépôt: 22735511.2
(22) Date de dépôt: 21.04.2022
(51) Int. Cl.: B64G 1/66, B64G 1/22, B64G 1/10, B64G 1/24, H01Q 1/08, H01Q 1/28, H01Q 3/12, H01Q 19/19, H01Q 15/16

(54) **SATELLITE RÉFLECTEUR ET ENSEMBLE SATELLITAIRE COMPRENANT UN TEL SATELLITE**
REFLEKTIERENDER SATELLIT UND SATELLITENANORDNUNG MIT EINEM SOLCHEN SATELLIT
REFLECTIVE SATELLITE AND SATELLITE ASSEMBLY COMPRISING SUCH A SATELLITE

(30) Priorité: 30.04.2021 FR 2104584
(43) Date de publication de la demande: 07.02.2024
(73) Titulaire: Airbus Defence and Space SAS, 31402 Toulouse Cedex 4 (FR); Airbus Defence and Space, S.A., 28022 Madrid (ES)
(72) Inventeur: CAVIGNAC, Axel, 31402 TOULOUSE CEDEX 4 (FR); MONTESANO, Antonio, 31402 TOULOUSE CEDEX 4 (FR)
(74) Mandataire: Plasseraud IP
(86) Numéro de dépôt international: PCT/FR2022/050762
(87) Numéro de publication internationale: WO 2022/229546

(56) Documents cités:
- WO-A1-2018/179547
- WO-A1-93/09029
- FR-A1- 2 965 410
- RU-C1- 2 058 916
- US-A- 3 521 290
- US-A- 3 559 919
- US-A- 4 843 397
- US-A- 6 002 360

## Description

### Domaine technique

La présente divulgation relève du domaine des satellites exploitant les ondes radiofréquences notamment pour des applications en télécommunication ou radiométrie, et concerne plus particulièrement un satellite réflecteur ainsi qu'un ensemble composé d'un satellite réflecteur et d'un satellite source distinct du satellite réflecteur.

### Technique antérieure

Les satellites exploitant les ondes radiofréquences, tels que les satellites de télécommunication, comprennent classiquement une antenne comprenant un émetteur-récepteur radiofréquence et un ou plusieurs réflecteurs qui sont montés sur des bras mobiles permettant de positionner les réflecteurs par rapport à l'émetteur-récepteur, de façon, par exemple, à assurer une liaison de télécommunication.

Le document EP3595088 intitulé « Array fed reflector antenna » décrit par exemple une antenne dans laquelle la position du point focal est réglable grâce à un bras télescopique permettant de déplacer le réflecteur par rapport à un réseau de sources.

Le document US5021798 intitulé « Antenna with positionable reflector » enseigne une antenne équipée d'un réflecteur orientable comprenant des bras de support.

Or, les satellites, tels que les satellites de télécommunication, doivent répondre à des exigences de plus en plus importantes en matière de gain ou de directivité d'un rayonnement radiofréquence émis vers ou reçu de la Terre pour assurer un débit et une précision d'écoute élevés. Pour pouvoir répondre à ces exigences de performance, un axe de développement est de chercher à accroître le diamètre des réflecteurs des satellites pour atteindre des dimensions de l'ordre de 50 mètres, voire 100 mètres de diamètre, tout en conservant une précision sur l'angle de pointage de l'ordre de 0,1° ou plus précise.

Actuellement les réflecteurs pour ondes radiofréquences dans les satellites sont généralement limités à une taille maximale de 20 mètres de diamètre, en raison de la complexité que cela induit en particulier au niveau mécanique pour le lancement ainsi que pour le déploiement du satellite.

On connait également du document US 4,843,397 un système d'antenne comprenant un réseau de satellites élémentaires comprenant chacun une antenne, ce réseau étant monté sur une structure tendue. Le document RU 2,058,916 décrit un système de communication comprenant une structure flexible portant des éléments de réception/transmission ainsi que des modules satellitaires. Le document US 3,521,290 décrit un réflecteur d'antenne déployable. Le document FR 2,965,410 décrit une antenne spatiale comprenant un satellite source et un satellite réflecteur dont les positions et orientations relatives sont maintenues pour correspondre à une configuration d'antenne.

### Résumé

La présente divulgation vient améliorer la situation.

En particulier, un but de la présente divulgation est de proposer une solution pour bénéficier d'un réflecteur de diamètre pouvant dépasser 50 mètres tout en présentant une précision de pointage satisfaisante.

Un autre but de l'invention est de proposer une architecture mécanique simplifiée.

Il est proposé un ensemble satellitaire selon la revendication 1.

Dans des modes de réalisation, chaque système de positionnement et d'orientation est réalisé à partir d'une plateforme satellitaire autonome, les plateformes satellitaires étant mécaniquement reliées entre elles par la structure porteuse et pilotées de façon synchronisée entre elles.

Dans des modes de réalisation, la surface de réflexion est parabolique.

Dans des modes de réalisation, la surface de réflexion présente un diamètre supérieur à 30 mètres.

Dans des modes de réalisation, la surface de réflexion 44t présente un diamètre supérieur à 50 mètres.

Dans des modes de réalisation, la structure porteuse comprend au moins une articulation et/ou au moins un mât télescopique de déploiement des systèmes de positionnement et d'orientation et d'extension d'une toile formant ladite surface de réflexion.

Dans des modes de réalisation, la structure porteuse en position déployée comprend au moins quatre poutres réparties angulairement autour d'un point central où les poutres se rejoignent en une de leurs extrémités, leur autre extrémité distale étant reliée à un des systèmes de positionnement et d'orientation, la toile en tension étant reliée au point central et aux extrémités distales des poutres.

Dans des modes de réalisation, chaque système de positionnement et d'orientation comprend au moins un panneau solaire orientable, l'orientation des panneaux solaires étant commandée de façon à compenser au moins partiellement un couple perturbateur solaire.

Dans des modes de réalisation, chaque système de positionnement et d'orientation comprend au moins une roue de réaction, les roues de réaction étant commandées de façon à compenser au moins partiellement des perturbations d'attitude dues aux manoeuvres de positionnement et à l'environnement spatial.

Dans des modes de réalisation, les systèmes propulseurs sont commandés de façon à modifier une orbite du satellite réflecteur et de façon à compenser au moins partiellement les perturbations dues à l'environnement spatial.

Dans des modes de réalisation, ledit satellite source est maître et ledit satellite réflecteur est esclave, ledit satellite source pilotant chacun des systèmes de positionnement et d'orientation du satellite réflecteur, ledit satellite source et le satellite réflecteur constituant une antenne active établissant une boucle de contrôle à bord et/ou au sol pour un ajustement des positions et de l'orientation du satellite source par rapport au satellite réflecteur ou d'un pointage de l'antenne active.

Dans des modes de réalisation, ladite source radiofréquence génère un faisceau d'ondes électromagnétiques parallèles réfléchies par la surface de réflexion du satellite réflecteur en un faisceau élargi
Ainsi, une liaison de télécommunication peut par exemple être assurée par deux satellites distincts, dont l'un porte une source radiofréquence et l'autre assure une fonction de réflecteur pouvant présenter un diamètre supérieur à 50 mètres. Ces deux satellites ne sont pas maintenus par une liaison mécanique mais par un asservissement en position relative permettant de satisfaire en permanence les exigences en matière de précision de pointage. De plus le réflecteur selon l'invention présente une robustesse de pointage accrue.

La structure de chaque satellite est clairement simplifiée par rapport à un satellite unique comprenant un réflecteur devant être déployé à l'issu du lancement du satellite, que ce soit sur le plan du dimensionnement, de la tenue au lancement ou encore de la cinématique de déploiement.

Avantageusement, le besoin en puissance du satellite source est également réduit grâce au gain important du réflecteur de grand diamètre.

L'absence de lien physique entre le satellite dit source et le satellite réflecteur confère également une plus grande flexibilité pour un ensemble satellitaire applicable à différentes missions. Il est en effet envisageable de remplacer, par des moyens simples, le satellite source, par exemple par un satellite source de conception plus récente ou présentant des fonctionnalités différentes pendant la durée de vie du satellite réflecteur.

### Brève description des dessins

D'autres caractéristiques, détails et avantages apparaîtront à la lecture de la description détaillée ci-après, et à l'analyse des dessins annexés, sur lesquels :
**Fig. 1**

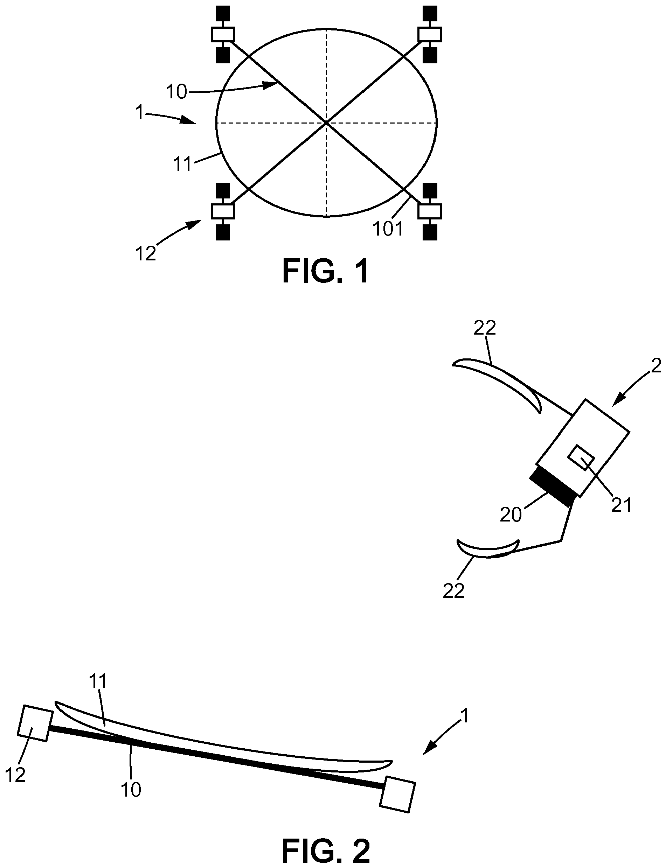

   [Fig. 1] représente schématiquement un satellite réflecteur selon un mode de réalisation.
**Fig. 2**
   [Fig. 2] représente schématiquement un ensemble satellitaire selon un mode de réalisation.
**Fig. 3**

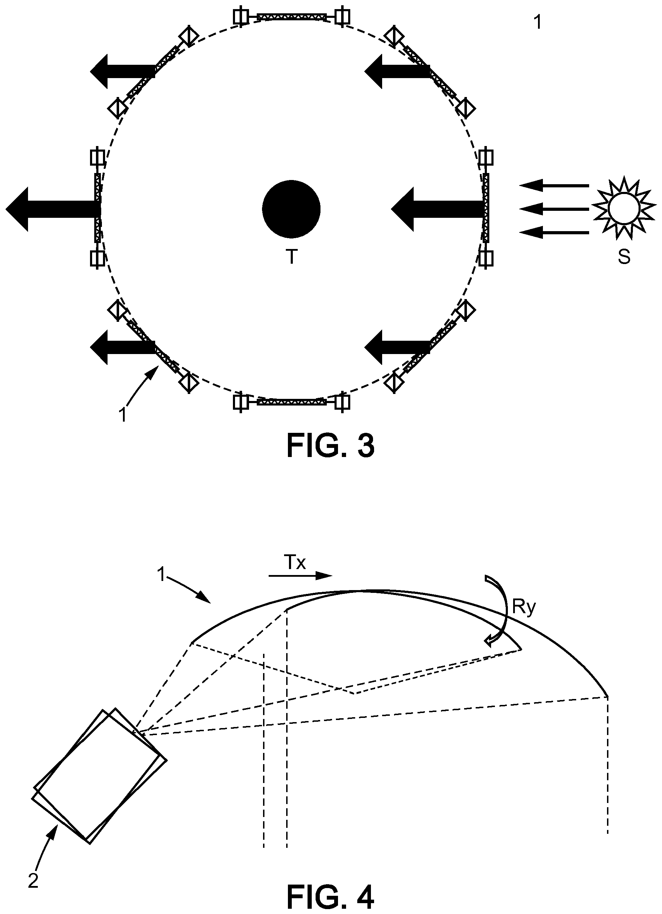

   [Fig. 3] montre schématiquement la variation de pression de radiation solaire induite sur un système réflecteur en fonction de sa position sur son orbite.
**Fig. 4**
   [Fig. 4] montre schématiquement la correction d'une dérive longitudinale du satellite réflecteur par rapport à un satellite source par une correction d'orientation du satellite réflecteur.
**Fig. 5**

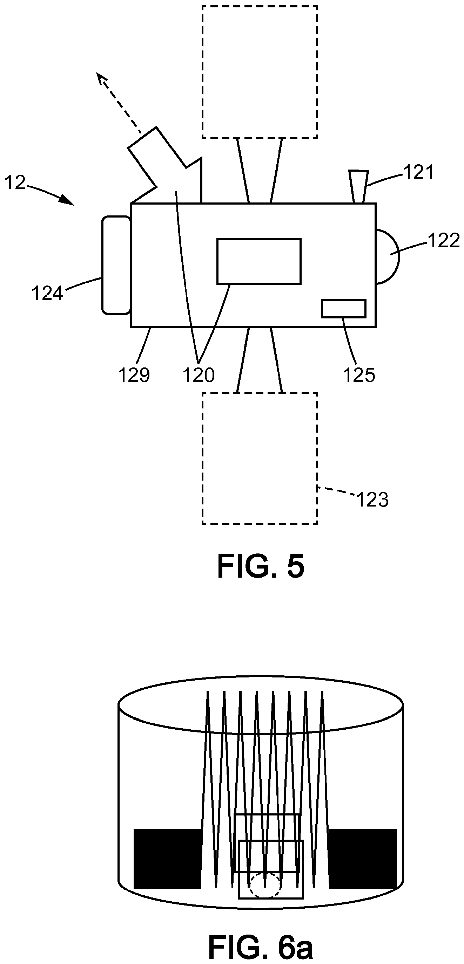

   [Fig. 5] montre schématiquement un système de positionnement et d'orientation d'un satellite réflecteur.
**Fig. 6a**
   [Fig. 6a] montre schématiquement un satellite réflecteur en configuration de stockage dans un lanceur.
**Fig. 6b**

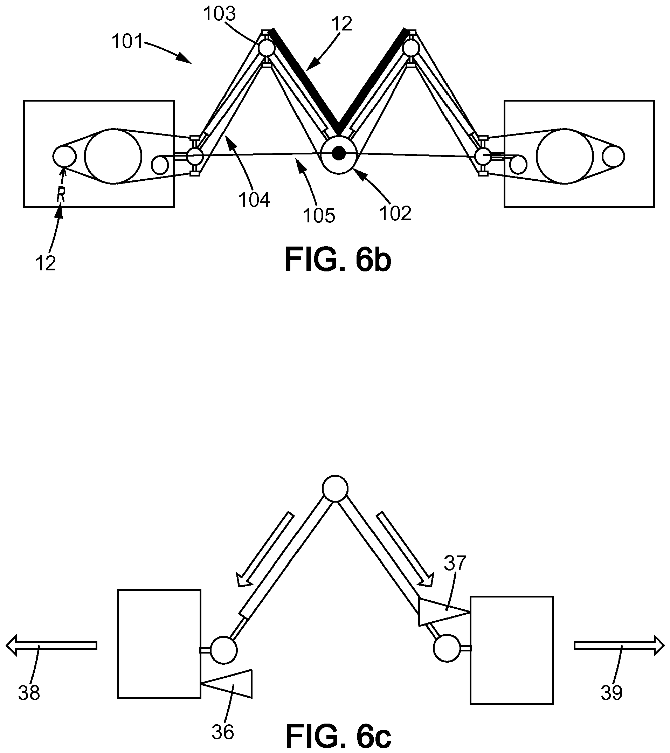

   [Fig. 6b] montre schématiquement un satellite réflecteur en cours de déploiement dans un mode de réalisation.
**Fig. 6c**
   [Fig. 6c] montre schématiquement un satellite réflecteur en cours de déploiement dans un mode de réalisation.
**Fig. 7a**

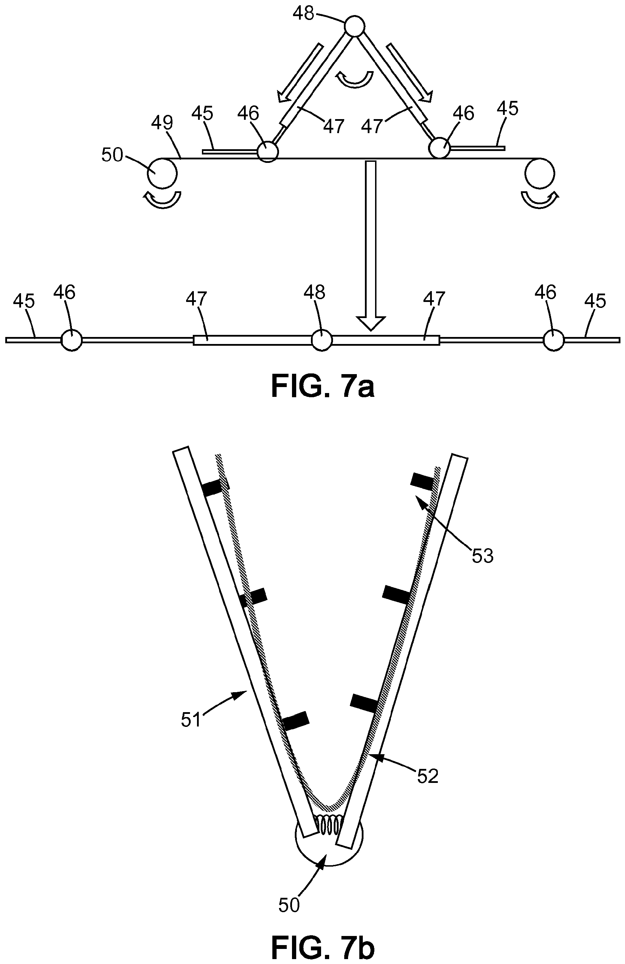

   [Fig. 7a] montre schématiquement le déploiement d'un exemple de bras selon l'invention.
**Fig. 7b**
   [Fig. 7b] montre schématiquement un exemple de déploiement de toile par rapport à un bras selon l'invention.
**Fig. 7c**

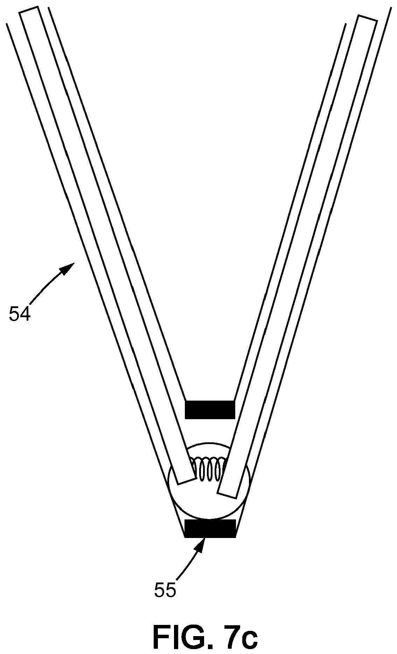

   [Fig. 7c] montre schématiquement un autre exemple de déploiement de toile par rapport à un bras selon l'invention.
**Fig. 8a**

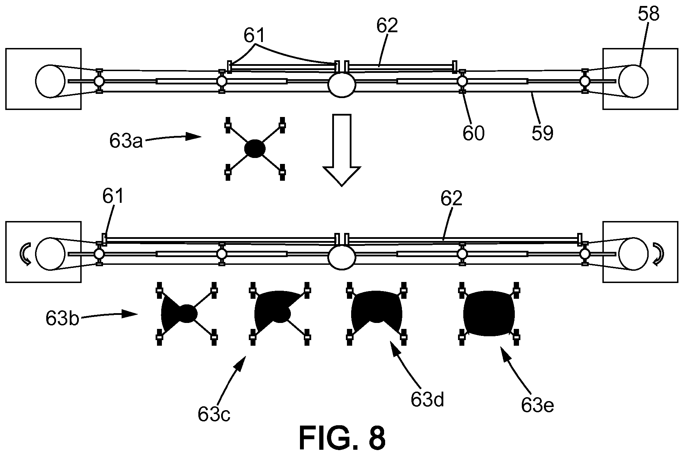

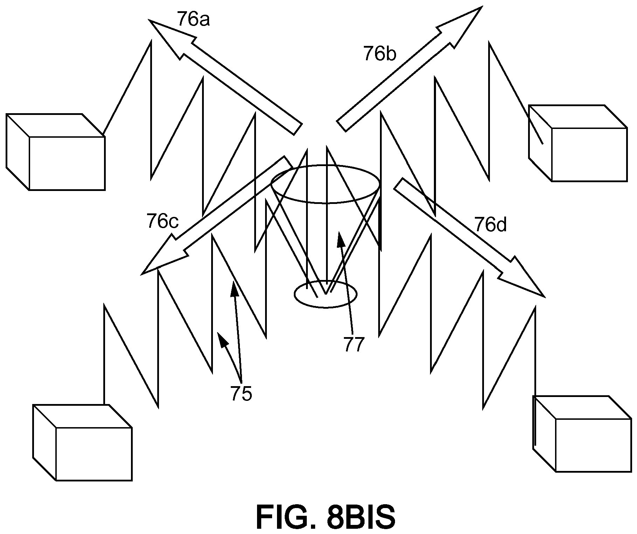

   [Fig. 8a] montre schématiquement le déploiement d'une toile formant la surface de réflexion.
**Fig. 8b**
   [Fig. 8b] montre schématiquement le déploiement d'une toile formant la surface de réflexion sur une structure en X.
**Fig. 9**

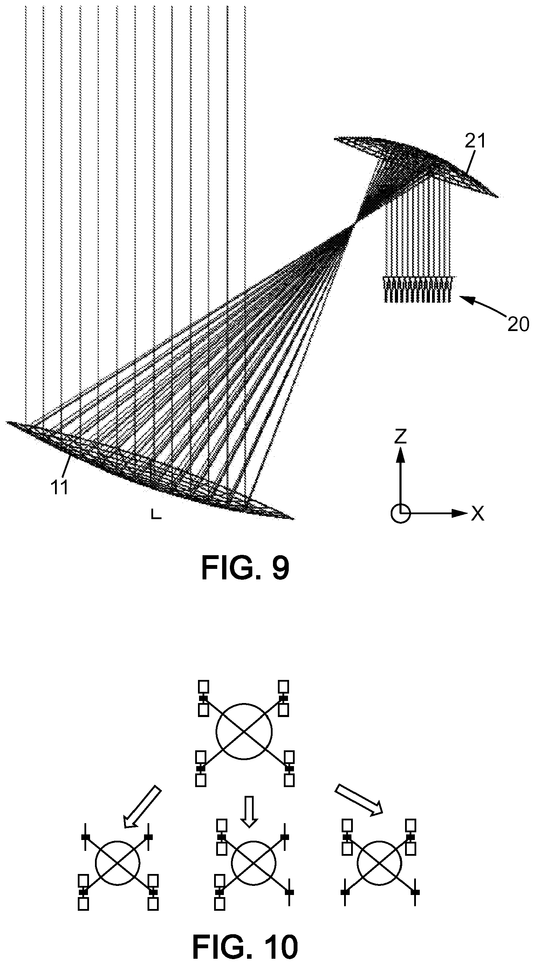

   [Fig. 9] montre schématiquement un exemple de double offset.
**Fig. 10**
   [Fig. 10] montre schématiquement un exemple de solar sailing.
**Fig.11**

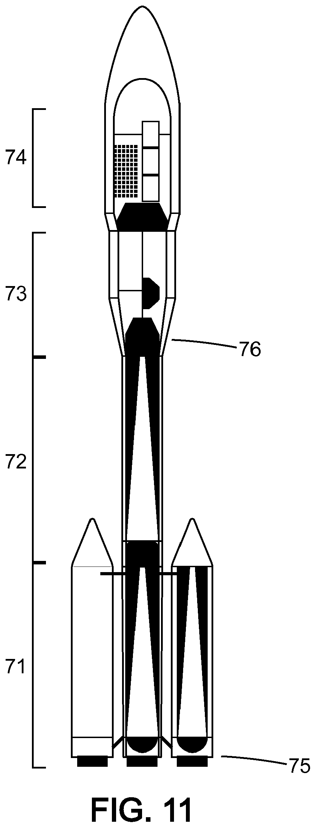

   [Fig.11] montre un exemple de lanceur embarquant un satellite source et un satellite réflecteur selon l'invention.
**Fig.12**

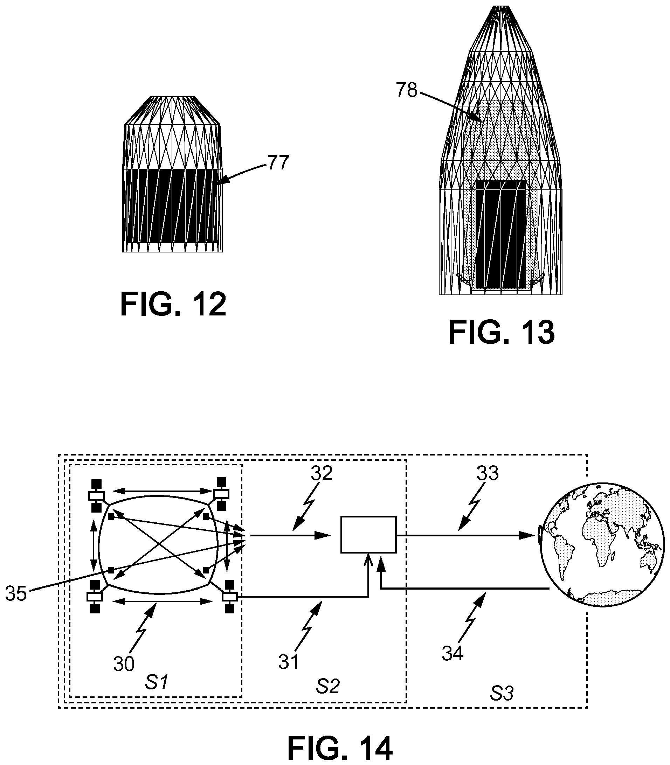

   [Fig.12] montre la partie de chargement basse du lanceur de la figure 11, embarquant le satellite réflecteur.
**Fig.13**
   [Fig.13] montre la partie de chargement haute du lanceur de la figure 11, embarquant le satellite source.
**Fig. 14**
   [Fig. 14] montre un exemple de synchronisation par boucle de contrôle

### Description des modes de réalisation

Il est maintenant fait référence à la figure 1, qui représente schématiquement un exemple de satellite réflecteur 1 selon l'invention. Le satellite réflecteur 1 comprend une surface de réflexion 11 incurvée montée sur une structure porteuse 10, la surface de réflexion étant adaptée pour réfléchir des rayonnements électromagnétiques, et en particulier des ondes radiofréquences. La structure porteuse comprend également une interface de support incurvée. A cet égard, la surface de réflexion 11 peut présenter une forme par exemple parabolique, et être formée d'un grillage métallique présentant une taille de maille adaptée à la fréquence d'application. En variante, la surface de réflexion peut également être formée par une toile souple métallisée. La surface de réflexion peut également être en carbone ou une autre surface réfléchissant les ondes radiofréquences.

En référence à la figure 2, le satellite réflecteur 1 est adapté pour être positionné relativement à un autre satellite dit satellite source 2 pour l'envoi ou la réception d'ondes radiofréquences. Le satellite source comporte par exemple une source 20 d'ondes radiofréquence. Le satellite réflecteur 1 et le satellite source 2 sont distants l'un de l'autre et non liés mécaniquement. De fait, le satellite réflecteur 1 et le satellite source 2 sont asservis en orientation et position l'un par rapport à l'autre, de sorte que la surface de réflexion 11 du satellite réflecteur 1 collabore avec la source radiofréquence 20 pour constituer un système émetteur et/ou réflecteur apte à émettre et/ou à recevoir un rayonnement radiofréquence vers et/ou depuis la Terre.

Un exemple d'émission par double offset est illustré à la figure 9. La source 20 est constituée d'un réseau de cornets générant un faisceau d'ondes radiofréquences réfléchi par un sous-réflecteur 22 du satellite source puis par le réflecteur 11 du satellite réflecteur. Le réglage de la distance entre la source et le réflecteur de plus grand diamètre n'est avantageusement pas soumis à des contraintes de tenue mécanique.

Ainsi il est par exemple possible de balayer une large bande terrestre. Une surface équivalente à un quart de la Terre sera par exemple couverte avec une antenne de 1,5m de diamètre en utilisant un réflecteur de 50m de diamètre.

Un satellite réflecteur selon l'invention est par exemple utilisé pour des applications en télécommunications où la distribution de données digitales peut par exemple aller jusqu'à plusieurs Tbit/s de débit. Le réflecteur pourra par exemple être utilisé pour les télécommunications en bandes S, L, C, X, Ku et Ka. La bande Ku est généralement définie de 12 GHz à 18 GHz. La bande Ka est généralement définie de 26 à 40 GHz. Les fréquences utilisées sont par exemple comprises entre 1GHz et 40GHz.

Un satellite réflecteur selon l'invention peut aussi être utilisé pour de la détection radar ou pour des applications scientifiques utilisant les micro-ondes (radiométrie par exemple), grâce notamment à son gain d'antenne important. Le diamètre important et la précision de pointage du réflecteur permettent en effet des performances accrues et une grande flexibilité dans ses utilisations.

Le réflecteur selon l'invention pourra également avantageusement être utilisé pour des applications à très haut débit, également désignées par VHTS (Very high throughput applications).

Le fait que le satellite réflecteur 1 soit un satellite non solidaire mécaniquement du satellite source implique qu'il faut tenir compte des perturbations spatiales exercées sur le satellite réflecteur, et mettre en oeuvre un contrôle d'attitude et d'orbite de ce satellite réflecteur pour compenser ces perturbations spatiales. En particulier, le satellite réflecteur est classiquement soumis à des perturbations de son orbite liées à la gravité variable exercée par le Soleil et la Lune, ainsi qu'aux irrégularités de la gravité terrestre.

De plus, comme la surface de réflexion du satellite réflecteur est toujours orientée en direction de la Terre, la pression de radiation solaire exercée sur la surface de réflexion varie en fonction de la position du satellite réflecteur sur son orbite de manière à causer une excentricité de cette orbite qu'il est nécessaire de compenser. Sur la figure 3, on a représenté schématiquement les différentes positions du satellite réflecteur 1 sur son orbite géostationnaire autour de la Terre T, et on a représenté schématiquement par des flèches de tailles différentes l'importance relative de la pression de radiation solaire exercée par le soleil S sur le satellite réflecteur en fonction de sa position sur son orbite et donc de son orientation par rapport au soleil.

La figure 10 représente des exemples d'orientation des panneaux solaires des systèmes de positionnement et d'orientation visant à compenser les pressions solaires exercées par le rayonnement solaire sur le satellite réflecteur et notamment sur ses panneaux solaires, également désignés par générateurs solaires. Une paire de systèmes de positionnement et d'orientation présente par exemple une première orientation de ses panneaux solaires, tandis qu'une autre paire présente une deuxième orientation distincte de la première. De manière non limitative, le satellite réflecteur comprend deux panneaux solaires par système de positionnement et d'orientation. En variante, on pourrait également envisager des systèmes de positionnement et d'orientation avec chacun un panneau solaire.

Comme représenté à la figure 2 ou à la figure 9, le satellite source 2 et le satellite réflecteur 1 sont configurés pour former un ensemble émetteur et/ou récepteur. Cet ensemble émetteur et/ou récepteur est, par exemple, en orbite géostationnaire ou en orbite basse (LEO/MEO), avec comme contrainte que le satellite réflecteur doit se trouver à une altitude légèrement différente de celle du satellite source, par exemple entre 50 mètres et 150 mètres, pour pouvoir assurer le positionnement relatif de ces deux satellites et pouvoir établir la liaison radiofréquence avec la Terre.

En référence à la figure 4, cette différence d'altitude qui induit une dérive en longitude Tx du satellite réflecteur par rapport au satellite source, peut être compensée par une correction de l'orientation de la surface de réflexion (selon l'axe représenté par la flèche Ry sur la figure) pour maintenir la direction de pointage.

Compte-tenu de ces différentes perturbations, et afin de contrôler l'orientation du satellite réflecteur 1, celui-ci comprend un ensemble de systèmes de positionnement et d'orientation 12 du satellite réflecteur 1, reliés à la structure porteuse 10, comprenant chacun au moins un système propulseur. Les systèmes de positionnement et d'orientation 12 permettent de réaliser un contrôle d'attitude et d'orbite du satellite réflecteur. Plus précisément, le satellite réflecteur 1 comprend au moins quatre systèmes de positionnement et d'orientation 12 disposés et synchronisés de manière à permettre une orientation du satellite réflecteur selon au moins deux axes de rotation, afin de mettre en oeuvre ce contrôle d'attitude et d'orbite. Dans un mode de réalisation, la structure porteuse 10 présente une forme en croix qui est décrite plus en détails ci-après, et chaque système de positionnement et d'orientation 12 est monté sur une extrémité de la croix. Les axes de rotation selon lesquels le satellite réflecteur peut être orienté correspondent dans ce cas aux deux branches de la croix.

En référence à la figure 5, on a représenté schématiquement un exemple de système de positionnement et d'orientation 12. Un tel système peut comprendre un châssis 129, assemblé mécaniquement à la structure porteuse, auquel sont reliés les différents composants du système de positionnement et d'orientation.

Chaque système propulseur d'un système de positionnement et d'orientation comprend par exemple un ou deux propulseurs, tels que des propulseurs électriques 120. Les axes de poussée des propulseurs sont de préférence alignés sur le centre de masse du système de positionnement et d'orientation. Les systèmes propulseurs sont notamment utilisés dans le contrôle d'orbite du satellite réflecteur, c'est-à-dire pour compenser les perturbations impliquant une modification de l'orbite du satellite réflecteur.

De plus, chaque système de positionnement et d'orientation peut comprendre un ensemble de capteurs et d'actionneurs intervenant dans le contrôle d'attitude et d'orbite. Par exemple, chaque système de positionnement et d'orientation peut comprendre au moins un capteur stellaire 121, permettant de déterminer l'attitude du satellite réflecteur par rapport à une ou plusieurs étoiles déterminées. Chaque système de positionnement et d'orientation peut également comprendre un émetteur et/ou récepteur optique et/ou radiofréquence 122, adapté pour établir un lien avec un émetteur/récepteur correspondant du satellite source de manière à pouvoir déterminer la position et l'orientation relative du satellite réflecteur par rapport au satellite source.

Chaque système de positionnement et d'orientation peut comprendre en outre un ou plusieurs générateurs solaires 123, permettant d'assurer l'alimentation électrique du ou des propulseurs. Dans des modes de réalisation, chaque système de positionnement et d'orientation comprend un ou plusieurs générateurs solaires 123 orientables, dont l'orientation peut être commandée de façon à compenser au moins partiellement un couple perturbateur solaire causé par la pression de radiation solaire, en mettant en oeuvre des techniques classiques de navigation solaire. Par exemple, chaque système de positionnement et d'orientation 12 peut comprendre deux générateurs solaires montés chacun sur un mât s'étendant perpendiculairement à deux parois opposées du châssis 129, les deux générateurs solaires étant orientables en rotation autour dudit mât.

Les systèmes de positionnement et d'orientation peuvent également comprendre un ou plusieurs actionneurs magnétiques (non représentés), c'est-à-dire des bobines créant un champ magnétique sur lequel agit le champ magnétique terrestre en créant un couple permettant de contrôler l'attitude du satellite réflecteur.

De plus, chaque système de positionnement et d'orientation peut comprendre en outre au moins une roue de réaction 124 commandée de façon à compenser au moins partiellement des perturbations dues à des manoeuvres de positionnement et/ou à corriger des erreurs de position ou d'orientation relative du satellite réflecteur par rapport au satellite source.

Le système propulseur de chaque système de positionnement et d'orientation peut aussi être utilisé pour réduire la saturation des roues à réaction quand un moment cinétique trop important y est accumulé.

Dans des modes de réalisation, chaque système de positionnement et d'orientation 12 du satellite réflecteur peut être réalisé à partir d'une plate-forme satellitaire autonome, les plateformes satellitaires étant mécaniquement reliées entre elles par la structure porteuse et pilotées de façon synchronisée entre elles. Ceci permet d'utiliser directement un satellite fonctionnel, par exemple du type microsatellite ou nanosatellite, pour réaliser chaque système de positionnement et d'orientation 12, ce qui représente une économie en matière de conception et de fabrication. Par exemple, chaque système de positionnement et d'orientation peut être obtenu à partir d'un satellite conçu pour être utilisé dans la constellation OneWeb.

Dans certains modes de réalisation, et notamment dans le cas où les systèmes de positionnement et d'orientation sont réalisés à partir de plateformes satellitaires autonomes, ils peuvent également comprendre une charge utile (non représentée), comprenant par exemple un ou plusieurs instruments d'observation ou des antennes additionnelles.

Comme indiqué ci-avant, les systèmes de positionnement et d'orientation 12 sont commandés de façon synchronisée pour réaliser un contrôle d'attitude et d'orbite du satellite réflecteur, afin que le satellite réflecteur soit correctement positionné et orienté par rapport au satellite source malgré l'absence de lien physique ou mécanique entre le satellite source et le satellite réflecteur, et par rapport à la Terre afin par exemple d'assurer une communication radiofréquence entre le satellite source et la Terre.

A cet égard, la commande des systèmes de positionnement et d'orientation peut être réalisée selon des techniques de vol en formation desdits systèmes, soit en étant coordonnées entre eux par rapport à un système de positionnement et d'orientation maître, soit en étant coordonnés par rapport au satellite source.

Pour ce faire, chaque système de positionnement et d'orientation 12 comprend avantageusement au moins un contrôleur 125. Dans des modes de réalisation, le satellite source 2 peut comprendre un contrôleur 21 dit maître communiquant indépendamment avec chaque contrôleur 125 dit esclave de chaque système de positionnement et d'orientation 2 pour acquérir des données acquises par les capteurs de chaque système de positionnement et d'orientation et actionner le système propulseur et/ou des actionneurs de chaque système de positionnement et d'orientation pour contrôler l'attitude et l'orbite du satellite réflecteur.

En variante, un des systèmes de positionnement et d'orientation peut comprendre un contrôleur 125 maître en communication avec un contrôleur du satellite source, et le contrôleur maître peut commander les contrôleurs esclaves associés aux autres systèmes de positionnement et d'orientation.

La figure 14 représente la mise en oeuvre d'une boucle de contrôle en trois étapes pouvant être exécutées consécutivement ou indépendamment les unes des autres.

Dans des modes de réalisation, lors d'une première étape S1, les systèmes de positionnement et d'orientation 12 du satellite réflecteur 1 sont configurés pour mettre en oeuvre une première boucle de contrôle portant sur l'attitude du satellite réflecteur. Cette boucle de contrôle se base sur les mesures d'attitude réalisées par les capteurs stellaires présents dans chaque système de positionnement et d'orientation. Les liaisons radiofréquences 30 sont par exemple établies entre les systèmes de positionnement et d'orientation pour permettre aux systèmes de positionnement et d'orientation d'agir de façon synchronisée.

Lors d'une deuxième étape S2, les systèmes de positionnement et d'orientation peuvent également être configurés pour mettre en oeuvre une deuxième boucle de contrôle, basée sur la position et l'attitude relative du satellite réflecteur par rapport au satellite source, obtenue à partir du lien optique et/ou radiofréquence établi entre chaque système de positionnement et d'orientation et le satellite source. Un lien optique 32 est par exemple établi entre le satellite source et des points 35 optiques de repérage en position, également désignés par pinball, disposés sur le réflecteur. Un lien radiofréquence de commande 31 entre le satellite source et un des systèmes de positionnement et d'orientation est par exemple établi.

Lors d'une troisième étape S3, dans des modes de réalisation, l'ensemble satellitaire formé par le satellite source 2 et le satellite réflecteur 1 peuvent constituer une antenne active établissant une boucle de contrôle à bord et/ou au sol fonction de la précision du pointage de l'antenne, pour ajuster la position et l'orientation du satellite source par rapport au satellite réflecteur. Par exemple, l'antenne active peut émettre un faisceau témoin qui est détecté par un ou plusieurs terminaux au sol. Le ou les terminaux au sol peuvent mesurer une valeur de dépointage du faisceau témoin et transmettre cette information à l'ensemble satellitaire pour corriger ce dépointage par un ajustement de la position et/ou de l'orientation du satellite source et/ou du satellite réflecteur ou une correction du pointage des faisceaux par l'antenne active. Un rayonnement radiofréquence dédié 33 est par exemple pointé en direction de la terre, tandis qu'une correction de pointage 34 est par exemple émise en retour vers le satellite source.

Le satellite réflecteur reste mécaniquement indépendant du satellite source, tout en contrôlant avec précision sa position et son orientation pour obtenir une précision de pointage satisfaisante, malgré les différentes perturbations évoquées ci-avant. Cela permet de simplifier considérablement la structure du satellite source comme du satellite réflecteur, et permet aussi de s'affranchir des contraintes liées au lancement d'un satellite comprenant à la fois une source radiofréquence et un réflecteur déployable.

En particulier, la surface de réflexion peut être de grande dimension, et présenter un diamètre supérieur à 30 mètres, voire supérieur à 50 mètres.

Dans des modes de réalisation, la structure porteuse 10 peut être une structure fabriquée dans l'espace. On pourra par exemple se référer au brevet FR3070049 intitulé « procédé de fabrication dans l'espace d'une structure de grandes dimensions » qui enseigne un treillis fabriqué à partir d'un enroulement de fil ou de bande métallique et une surface formée par des tuiles montées sur le treillis.

En variante, et comme représenté schématiquement dans la figure 6a, la structure porteuse 10 peut être une structure déployable fabriquée au sol et conçue pour permettre son lancement dans la coiffe d'un lanceur dans une configuration de stockage.

Par exemple, la structure porteuse 10 peut présenter une forme d'étoile comprenant un ensemble de poutres 101 réparties angulairement autour d'un point central 102 au niveau duquel les poutres se rejoignent en une de leurs extrémités ; l'autre extrémité de chaque poutre portant un système de positionnement et d'orientation 12 du satellite réflecteur. Dans des modes de réalisation, la structure porteuse comprend un nombre pair de poutres qui sont alignées deux à deux. Comme indiqué ci-avant, dans un mode de réalisation, le satellite réflecteur comprend quatre systèmes de positionnement et d'orientation 12 et dans ce cas la structure porteuse présente une forme de croix comprenant quatre poutres 101 portant chacune un système de positionnement et d'orientation. En variante, la structure porteuse peut aussi comprendre six ou huit poutres, et dans ce cas le satellite réflecteur comprend respectivement six ou huit systèmes de positionnement et d'orientation, chacun étant monté à l'extrémité d'une poutre respective.

Dans le cas où le satellite réflecteur est conçu pour être déployé depuis un lanceur, la structure porteuse 10 comprend par exemple un ensemble d'articulations 103 et/ou de mâts télescopiques de déploiement des systèmes de positionnement et d'orientation 12, permettant d'adopter une configuration repliée suffisamment compacte pour pouvoir être disposée dans la coiffe d'un lanceur, et une configuration déployée dans laquelle les systèmes de positionnement et d'orientation se trouvent aux extrémités des poutres déployées de la structure porteuse. Dans ce cas également, la structure porteuse 10 peut comprendre en outre un dispositif d'extension 104 d'une toile formant la surface de réflexion 11, de sorte que la toile une fois déployée s'étende depuis le point central 102 de la structure porteuse jusqu'aux extrémités distales des poutres.

Selon un exemple non limitatif représenté sur la figure 6b, chaque poutre 101 de la structure porteuse 10 s'étendant à partir du point central 102 peut être formée d'un bras articulé pouvant être replié, où au niveau de chaque articulation 103 un ressort permet d'exercer une force tendant au déploiement de l'articulation. Un bras peut comprendre deux segments ou plus repliés les uns contre les autres. Un câble de retenue 105, reliant par exemple le point central et deux systèmes de positionnement et d'orientation opposés, peut être déroulé de façon contrôlée pour maîtriser la vitesse de déploiement, une réserve de câble R pouvant à cet égard être l'objet dans les systèmes de positionnement et d'orientation. Avantageusement, les contraintes mécaniques appliquées sur la structure à déployer et notamment sur les bras articulés entre eux, sont alors amoindries.

Selon un exemple non limitatif représenté à la figure 6c, les tuyères 36 et 37 des systèmes de positionnement et d'orientation sont actionnées pour générer deux forces 38 et 39 de déploiement opposées. Avantageusement encore, la structure de déploiement est fortement simplifiée.

Les bras sont par exemple des bras articulés et/ou télescopiques.

Alternativement un câble de retenue peut être utilisé en collaboration avec les tuyères 36 et 37 des systèmes de positionnement et d'orientation.

On peut également envisager l'assemblage d'un réflecteur dans l'espace, comme proposé dans le brevet FR3083216 intitulé « structure assemblée et réglée dans l'espace » qui enseigne une structure en treillis supportant plusieurs tuiles réglables en position et pouvant former le réflecteur.

La figure 7a montre un exemple de bras articulés et télescopiques. Les bras se déploient d'une part en alignant leurs portions et d'autre part en étendant leurs portions télescopiques. Le déploiement est par exemple contrôlé par un ensemble de poulies 50 et de câbles 49 de retenue. Un support 45 est par exemple relié par une liaison pivotante 46 à un bras télescopique 47. Le montage est ici réalisé symétrique par rapport à une liaison pivotante 48 centrale reliant entre eux deux bras télescopiques 47.

La figure 7b montre un exemple de toile maintenue sur un bras replié. Les segments du bras 51 sont reliés entre eux par exemple par un axe de déploiement 50 comprenant un ressort tendant à écarter les segments du bras vers leur position d'alignement. La toile 52, ou meshing en anglais, est par exemple tenue par des pions 53 fixés au bras 51 et solidarisés à la toile 52 par des rivets. Les pions permettent ainsi de positionner certains points de la toile par rapport au bras pour lui conférer son positionnement par rapport au bras déployé, lorsque la toile est tendue. On peut ainsi donner une forme incurvée à la toile formant la surface de réflexion.

La figure 7c montre un autre exemple de bras de support de la toile. Les segments du bras sont reliés entre eux par exemple par un axe de déploiement comprenant un ressort tendant à écarter les segments du bras vers leur position d'alignement. Sur chacune des faces du bras, on prévoit par exemple un câble 54 passant par des guides 55. Ce câble 54 peut ainsi être déplacé par rapport aux guides 55 pour tirer une toile et l'étendre au-dessus du bras. Dans cet exemple, les segments du bras peuvent également être télescopiques.

Le dispositif d'extension 104 de la toile formant une surface de réflexion peut notamment comprendre un ensemble de poulies agencées dans chaque système de positionnement et d'orientation 12, et de câbles s'étendant entre le point central et chaque poulie, auxquels est assemblée la toile formant la surface de réflexion.

Chaque poutre 101 de la structure porteuse peut également se présenter sous la forme d'un bras télescopique à l'extrémité duquel est fixé un câble de déploiement pour la toile formant la surface de réflexion, de sorte que le déploiement du bras télescopique permette également le déploiement de la toile.

La structure porteuse est également configurée pour conférer à la surface de réflexion, une fois déployée, une forme incurvée, par exemple selon un profil parabolique. Par exemple, les poutres de la structure porteuse peuvent comprendre des guides déployables permettant de conférer cette forme à la surface de réflexion une fois tendue.

Dans des modes de réalisation, que la structure porteuse soit fabriquée au sol, lancée et déployée dans l'espace ou qu'elle soit fabriquée dans l'espace, la structure porteuse peut présenter une forme en croix ou en étoile comme décrit ci-avant ou une autre forme. Par exemple, la structure porteuse 10 peut présenter une forme de polygone comprenant autant de sommets que de systèmes de positionnement et d'orientation. Dans le cas où le satellite réflecteur comprend par exemple quatre systèmes de positionnement et d'orientation, la structure porteuse peut présenter une forme carrée.

Comme représenté à la figure 8a, la structure porteuse peut être déployée préalablement au déploiement de la toile formant la surface de réflexion. La structure porteuse déployée comprend aux extrémités des bras, des roues 58 de commande de câbles 59 passant par des éléments de guidage 60 relativement à la structure porteuse. Les guides 60 de câble sont par exemple solidarisés aux bras. Comme on le voit sur le schéma 63a en vue de dessus, la toile non étirée est par exemple initialement placée au centre de la structure. La toile 62 est par exemple maintenue au centre par des pions 61 solidaires du centre. La toile 62 est par ailleurs fixée à d'autres pions 61 disposés en périphérie de la toile et en vis-à-vis d'un des bras. Les pions peuvent par exemple être entraînés par les câbles 59, mis en mouvement par les roues de commande 58.

Ainsi la toile 62 peut être entraînée par rapport à chaque bras, les pions 61 périphériques avançant chacun le long d'un bras. Deux pions sont par exemple tirés, par des câbles, le long de deux bras voisins pour étendre un quart de la toile, comme représenté en 63b. Puis deux autres pions sont tirés le long des deux bras voisins suivant pour étendre un autre quart de la toile, comme représenté en 63c. En 63d, les trois quart de la toile ont été étirés par deux autres pions, le long des deux bras voisins suivant. Enfin en mettant en mouvement les câbles tirant les pions pour le quart restant, la toile est entièrement étendue, comme représenté en 63e.

Alternativement la toile peut être tendue simultanément au déploiement de la structure porteuse.

Comme représenté à la figure 8b, les bras, tels que représentés aux figures 6b, 6c, 7a, 7b ou 7c, peuvent s'intégrer dans la structure déployable. Les bras 75 sont reliées les uns à la suite des autres pour former plusieurs axes de grande longueur. La structure présente par exemple une forme en X comprenant quatre axes de grande longueur. La toile déployable 77 est par exemple stockée au centre de la structure.

De retour à la figure 2, le satellite source 2 peut comprendre une source radiofréquence 20 qui génère un faisceau d'ondes radiofréquences parallèles. Cette source radiofréquence peut être un réseau de cornets générant un faisceau d'ondes multiples. On peut aussi envisager plusieurs sources ou une source unique générant un rayonnement radiofréquence.

La source peut soit être orientée directement vers la surface de réflexion 11 du satellite réflecteur 1 pour être renvoyée vers la zone pointée sur Terre, soit le satellite réflecteur peut également comprendre un ou plusieurs réflecteur(s), dit(s) sous-réflecteur(s) 22 qui sont intercalés entre la source et la surface de réflexion du satellite réflecteur de sorte que l'ensemble constitué par la surface de réflexion, la source radiofréquence et le ou les sous-réflecteur(s) constitue une antenne apte à émettre ou recevoir un rayonnement radiofréquence vers ou depuis la Terre.

Par exemple, comme représenté à la figure 9, une antenne peut présenter une configuration dite à double excentration ou double offset, comprenant la source de radiofréquence du satellite source, la surface de réflexion du satellite réflecteur et un sous-réflecteur porté par le satellite source et positionné de manière à réfléchir des rayonnements émis par la source vers le satellite réflecteur, pour que ce dernier les réfléchisse vers la Terre, et inversement.

En référence à la figure 2, l'antenne peut également présenter une configuration dite à triple excentration ou triple offset dans laquelle le satellite source 2 comprend deux réflecteurs 22 dits respectivement premier et deuxième sous-réflecteurs, qui sont positionnés de sorte qu'un faisceau émis par la source 20 soit réfléchit par le premier sous-réflecteur vers le deuxième, puis réfléchi par le deuxième sous-réflecteur vers la surface de réflexion 11 du satellite réflecteur qui à son tour réfléchit le faisceau vers la Terre. Inversement, un rayonnement ou un faisceau peut être émis depuis la terre vers le satellite source.

Dans ces cas, le ou les sous-réflecteurs portés par le satellite source peuvent être déployés pour adopter leur configuration opérationnelle après le lancement. Le faisceau d'ondes électromagnétiques parallèles généré par la source, ou le réseau de sources, est donc élargi à chaque réflexion, que ce soit par un sous-réflecteur intermédiaire ou par la surface de réflexion du satellite réflecteur. Ainsi, les configurations à double ou triple excentrations permettent d'étendre sensiblement la couverture au sol de l'antenne tout en conservant des dimensions restreintes pour la source.

La figure 11 représente un exemple de lanceur emportant le satellite source et le satellite réflecteur. Le lanceur comprend par exemple un premier étage 71 surmonté d'un deuxième étage 72, lui-même surmonté d'un étage supérieur 73 puis d'une coiffe comprenant un espace 74 pour la charge utile. Le premier étage comprend dans sa partie inférieure les tuyères 75 du lanceur. L'étage supérieur comprend dans sa partie inférieure un moteur, tel qu'un moteur Vinci, fonctionnant à l'oxygène liquide et à l'hydrogène liquide. Les premier et deuxième étages fonctionnent par exemple au propergol solide. La charge utile comprend une position haute et une position basse pour recevoir les éléments constituant la charge utile.

La partie de chargement basse du lanceur, comme représenté à la figure 12, embarque par exemple le satellite réflecteur dans sa position repliée 77. Le satellite réflecteur en position repliée 77 est par exemple placé sous le cadre de séparation d'un système de lancement double du lanceur Ariane, également dénommé SYLDA. Le satellite réflecteur sera par exemple injecté en orbite géostationnaire

La partie de chargement haute du lanceur, comme représenté à la figure 13, embarque par exemple le satellite source 78 dans sa position repliée. Le satellite source en position repliée 78 est par exemple placé au-dessus du cadre de séparation du SYLDA. Le satellite source sera par exemple injecté en orbite proche de l'orbite géostationnaire. Ainsi le satellite source et le satellite réflecteur peuvent être lancés lors d'un lancement double, de la même façon que deux satellites indépendants.

Le satellite réflecteur et le satellite source peuvent également être injectés lors de deux lancements distincts.

## Revendications

1. Ensemble satellitaire, comprenant un satellite réflecteur (1) comprenant au moins une surface de réflexion (11) incurvée adaptée pour réfléchir des rayonnements électromagnétiques, et au moins une structure porteuse (10) de ladite surface de réflexion incurvée, la structure porteuse reliant entre eux au moins quatre systèmes de positionnement et d'orientation (12) du satellite réflecteur (1) pour réaliser un contrôle d'attitude et d'orbite, lesdits systèmes de positionnement et d'orientation comprenant chacun au moins un système propulseur (120), lesdits systèmes de positionnement et d'orientation étant synchronisés et disposés de façon à permettre une orientation du satellite réflecteur selon au moins deux axes de rotation,
l'ensemble satellitaire comprenant en outre au moins un autre satellite dit satellite source (2) comprenant au moins une source radiofréquence (20), le satellite réflecteur et ledit satellite source étant distants et asservis en position l'un par rapport à l'autre de sorte que ladite surface de réflexion (11) collabore avec ladite source radiofréquence (20) pour constituer un système émetteur et/ou récepteur apte à émettre et/ou à recevoir un rayonnement radiofréquence vers et/ou depuis la terre,
et dans lequel le satellite source (2) comprend :
- un réseau de sources et
- un sous-réflecteur (22), ou des premier et deuxième sous-réflecteurs (22), positionnés de manière à ce qu'un faisceau émis par le réseau de sources soit réfléchi par le premier sous-réflecteur vers le deuxième sous-réflecteur, puis réfléchi par le deuxième sous-réflecteur vers la surface de réflexion du satellite source,
de sorte que l'ensemble constitué par la surface de réflexion, le réseau de source et le sous-réflecteur ou les premier et deuxième sous-réflecteurs constitue une antenne apte à émettre ou recevoir un rayonnement radiofréquence vers ou depuis la Terre.

2. Ensemble satellitaire selon la revendication 1, dans lequel la surface de réflexion incurvée est formée d'un grillage, d'une toile ou d'un matériau réfléchissant les ondes radiofréquences.

3. Ensemble satellitaire selon la revendication 1 ou 2, dans lequel chaque système de positionnement et d'orientation (12) est réalisé à partir d'une plateforme satellitaire autonome, les plateformes satellitaires étant mécaniquement reliées entre elles par la structure porteuse (10) et pilotées de façon synchronisée entre elles.

4. Ensemble satellitaire selon l'une des revendications précédentes, dans lequel la surface de réflexion (11) est parabolique.

5. Ensemble satellitaire selon l'une des revendications précédentes, dans lequel la surface de réflexion (11) présente un diamètre supérieur à 30 mètres.

6. Ensemble satellitaire selon l'une des revendications précédentes, dans lequel la structure porteuse (10) comprend au moins une articulation (10) et/ou au moins un mât télescopique de déploiement des systèmes de positionnement et d'orientation (12) et d'extension (104) d'une toile formant ladite surface de réflexion (11).

7. Ensemble satellitaire selon la revendication 6, dans lequel la structure porteuse (10) en position déployée comprend au moins quatre poutres (101) réparties angulairement autour d'un point central (102) où les poutres se rejoignent en une de leurs extrémités, leur autre extrémité distale étant reliée à un des systèmes de positionnement et d'orientation (12), la toile en tension étant reliée au point central et aux extrémités distales des poutres.

8. Ensemble satellitaire selon l'une des revendications précédentes, dans lequel chaque système de positionnement et d'orientation (12) comprend au moins un panneau solaire (123) orientable, l'orientation des panneaux solaires étant commandée de façon à compenser au moins partiellement un couple perturbateur solaire.

9. Ensemble satellitaire selon l'une des revendications précédentes, dans lequel chaque système (12) de positionnement et d'orientation comprend au moins une roue de réaction (124), les roues de réaction étant commandées de façon à compenser au moins partiellement des perturbations d'attitude dues aux manoeuvres de positionnement et à l'environnement spatial.

10. Ensemble satellitaire selon l'une des revendications 1 à 9, dans lequel les systèmes propulseurs (120) sont commandés de façon à modifier une orbite du satellite réflecteur et de façon à compenser au moins partiellement les perturbations dues à l'environnement spatial.

11. Ensemble satellitaire selon l'une des revendications précédentes, dans lequel ledit satellite source (2) est maître et ledit satellite réflecteur (1) est esclave, ledit satellite source pilotant chacun des systèmes de positionnement et d'orientation (12) du satellite réflecteur, ledit satellite source (2) et le satellite réflecteur (1) constituant une antenne active établissant une boucle de contrôle à bord et/ou au sol pour un ajustement des positions et de l'orientation du satellite source par rapport au satellite réflecteur ou d'un pointage de l'antenne active.

12. Ensemble satellitaire selon l'une des revendications précédentes, dans lequel ladite source radiofréquence (20) génère un faisceau d'ondes électromagnétiques parallèles réfléchies par la surface de réflexion (11) du satellite réflecteur en un faisceau élargi.

## Patentansprüche

1. Satellitenanordnung, aufweisend einen reflektierenden Satelliten (1) mit mindestens einer zum Reflektieren von elektromagnetischen Strahlungen geeigneten gewölbten Reflexionsfläche (11) und mindestens einer Trägerstruktur (10) der gewölbten Reflexionsfläche, wobei die Trägerstruktur mindestens vier zum Durchführen einer Lage- und Bahnsteuerung vorgesehene Positionierungs- und Orientierungssysteme (12) des reflektierenden Satelliten (1) miteinander verbindet, wobei die Positionierungs- und Orientierungssysteme jeweils mindestens ein Antriebssystem (120) aufweisen, die Positionierungs- und Orientierungssysteme derart synchronisiert und angeordnet sind, um eine Orientierung des reflektierenden Satelliten gemäß mindestens zwei Rotationsachsen zu erlauben,
wobei die Satellitenanordnung ferner mindestens einen anderen Satelliten (2), genannt Quellensatellit, aufweist, der mindestens eine Hochfrequenzquelle (20) aufweist, wobei der reflektierende Satellit und der Quellensatellit voneinander beabstandet sind und relativ zueinander positionsgesteuert werden, so dass die Reflexionsfläche (11) mit der Hochfrequenzquelle (20) zusammenwirkt, um ein Sender-und/oder Empfänger-System zu bilden, das fähig ist, eine Hochfrequenzstrahlung hin zur Erde zu senden und/oder von der Erde her zu empfangen,
und in welcher der Quellensatellit (2) aufweist:
- ein Netz von Quellen, und
- einen Subreflektor (22) oder einen ersten und zweiten Subreflektor (22), die derart angeordnet sind, dass ein von dem Netz von Quellen emittiertes Bündel von dem ersten Subreflektor hin zu dem zweiten Subreflektor reflektiert wird, dann von dem zweiten Subreflektor hin zur Reflexionsfläche des Quellensatelliten reflektiert wird,
so dass die Anordnung, die aus der Reflexionsfläche, dem Netz von Quellen und dem Subreflektor oder dem ersten und zweiten Subreflektor besteht, eine Antenne bildet, die eingerichtet ist, eine Hochfrequenzstrahlung hin zur Erde zu senden und/oder von der Erde her zu empfangen.

2. Satellitenanordnung nach Anspruch 1, in welcher die gewölbte Reflexionsfläche aus einem Gitter, einem Gewebe oder einem Material, das Hochfrequenzwellen reflektiert, gebildet ist.

3. Satellitenanordnung nach Anspruch 1 oder 2, in welcher jedes Positionierungs-und Orientierungssystem (12) aus einer autonomen Satellitenplattform besteht, wobei die Satellitenplattformen über die Trägerstruktur (10) mechanisch miteinander verbunden sind und auf eine miteinander synchronisierte Weise gesteuert werden.

4. Satellitenanordnung nach einem der vorstehenden Ansprüche, in welcher die Reflexionsfläche parabolisch ist.

5. Satellitenanordnung nach einem der vorstehenden Ansprüche, in welcher die Reflexionsfläche (11) einen Durchmesser von mehr als 30 Meter aufweist.

6. Satellitenanordnung nach einem der vorstehenden Ansprüche, in welcher die Trägerstruktur (10) mindestens ein Gelenk (10) und/oder mindestens einen Teleskopmast zur Entfaltung der Positionierungs- und Orientierungssysteme (12) und Ausbreitung (104) eines die Reflexionsfläche (11) bildenden Gewebes aufweist.

7. Satellitenanordnung nach Anspruch 6, in welcher die Trägerstruktur (10) in der entfalteten Position mindestens vier Balken (101) aufweist, die in Winkelrichtung um einen zentralen Punkt (102) herum verteilt sind, wo die Balken an einem ihrer Enden sich vereinen, wobei ihr anderes, distales Ende mit einem der Positionierungs- und Orientierungssysteme (12) verbunden ist, das gespannte Gewebe mit dem zentralen Punkt und den distalen Enden der Balken verbunden ist.

8. Satellitenanordnung nach einem der vorstehenden Ansprüche, in welcher jedes Positionierungs- und Orientierungssystem (12) mindestens ein orientierbares Solarpaneel (123) aufweist, wobei die Orientierung der Solarpaneele derart gesteuert wird, um ein solares Störungspaar mindestens teilweise zu kompensieren.

9. Satellitenanordnung nach einem der vorstehenden Ansprüche, in welcher jedes Positionierungs- und Orientierungssystem mindestens ein Reaktionsrad (124) aufweist, wobei jedes Reaktionsrad derart gesteuert wird, um Lagestörungen, die von Positionierungsmanövern und von der Weltraumumgebung hervorgerufen werden, mindestens teilweise zu kompensieren.

10. Satellitenanordnung nach einem der Ansprüche 1 bis 9, in welcher die Antriebssysteme (120) so gesteuert werden, um einen Orbit des reflektierenden Satelliten zu ändern, und um die von der Weltraumumgebung hervorgerufenen Störungen mindestens teilweise zu kompensieren.

11. Satellitenanordnung nach einem der vorstehenden Ansprüche, in welcher der Quellensatellit (2) Master ist und der reflektierende Satellit (1) Sklave ist, wobei der Quellensatellit jedes der Positionierungs- und Orientierungssysteme (12) des reflektierenden Satelliten steuert, wobei der Quellensatellit (2) und der reflektierende Satellit (1) eine aktive Antenne bilden, die eine Bord- und/oder Boden-Regelschleife für eine Anpassung der Positionen und der Orientierung des Quellensatelliten bezüglich des reflektierenden Satelliten oder für eine Ausrichtung der aktiven Antenne bereitstellt.

12. Satellitenanordnung nach einem der vorstehenden Ansprüche, in welcher die Hochfrequenzquelle (20) ein Bündel paralleler elektromagnetischer Wellen erzeugt, die von der Reflexionsfläche (11) des reflektierenden Satelliten in ein verbreitertes Bündel reflektiert werden.

## Claims

1. A satellite assembly, comprising a reflector satellite (1) comprising at least one curved reflection surface (11) adapted to reflect electromagnetic radiation, and at least one supporting structure (10) of said curved reflection surface, the supporting structure connecting at least four positioning and orientation systems (12) of the reflector satellite (1) to each other to carry out attitude and orbit control, said positioning and orientation systems each comprising at least one propulsion system (120), said positioning and orientation systems being synchronised and disposed so as to allow orientation of the reflector satellite along at least two axes of rotation,
the satellite assembly further comprising at least one other satellite called source satellite (2) comprising at least one radio frequency source (20), the reflector satellite and said source satellite being distant and servo-controlled in position relative to each other so that said reflection surface (11) collaborates with said radio frequency source (20) to constitute an emitter and/or receiver system capable of emitting and/or receiving radiofrequency radiation to and/or from the earth,
and wherein the source satellite (2) comprises:
- an array of sources and
- a sub-reflector (22), or first and second sub-reflectors (22), positioned such that a beam emitted by the array of sources is reflected by the first sub-reflector towards the second sub-reflector, then reflected by the second sub-reflector towards the reflection surface of the source satellite,
so that the assembly consisting of the reflection surface, the source array and the sub-reflector or the first and second sub-reflectors constitutes an antenna capable of emitting or receiving radiofrequency radiation to or from the Earth.

2. The satellite assembly according to claim 1, wherein the curved reflection surface is formed of a mesh, a canvas or a material reflecting radio frequency waves.

3. The satellite assembly according to claim 1 or 2, wherein each positioning and orientation system (12) is produced from an autonomous satellite platform, the satellite platforms being mechanically connected together by the supporting structure (10) and controlled synchronously with each other.

4. The satellite assembly according to one of the preceding claims, wherein the reflection surface (11) is parabolic.

5. The satellite assembly according to one of the preceding claims, wherein the reflection surface (11) has a diameter greater than 30 metres.

6. The satellite assembly according to one of the preceding claims, wherein the supporting structure (10) comprises at least one articulation (10) and/or at least one telescopic mast for deploying the positioning and orientation systems (12) and for extending (104) a canvas forming said reflection surface (11).

7. The satellite assembly according to claim 6, wherein the supporting structure (10) in the deployed position comprises at least four beams (101) distributed angularly around a central point (102) where the beams meet at one of their ends, their other distal end being connected to one of the positioning and orientation systems (12), the tensioned canvas being connected to the central point and to the distal ends of the beams.

8. The satellite assembly according to one of the preceding claims, wherein each positioning and orientation system (12) comprises at least one orientable solar panel (123), the orientation of the solar panels being controlled so as to compensate at least partially a solar disturbance torque.

9. The satellite assembly according to one of the preceding claims, wherein each positioning and orientation system (12) comprises at least one reaction wheel (124), the reaction wheels being controlled so as to at least partially compensate for attitude disturbances due to positioning manoeuvres and the spatial environment.

10. The satellite assembly according to one of claims 1 to 9, wherein the propulsion systems (120) are controlled so as to modify an orbit of the reflector satellite and so as to at least partially compensate for disturbances due to the space environment.

11. The satellite assembly according to one of the preceding claims, wherein said source satellite (2) is master and said reflector satellite (1) is slave, said source satellite controlling each of the positioning and orientation systems (12) of the satellite reflector, said source satellite (2) and the reflector satellite (1) constituting an active antenna establishing a control loop on board and/or on the ground for adjusting the positions and orientation of the source satellite relative to the reflector satellite or a pointing of the active antenna.

12. The satellite assembly according to one of the preceding claims, wherein said radio frequency source (20) generates a beam of parallel electromagnetic waves reflected by the reflection surface (11) of the reflector satellite into an expanded beam.
